# EUROPÄISCHE PATENTSCHRIFT

(11) **EP 4 147 305 B1**
(45) Veröffentlichungstag und Bekanntmachung des Hinweises auf die Patenterteilung: **24.06.2026**
(21) Anmeldenummer: 21720730.7
(22) Anmeldetag: 21.04.2021
(51) Int. Cl.: H01R 4/02, H01R 43/02, B23K 20/12, H01R 11/05, H01R 4/62

(54) **VERBINDUNGSANORDNUNG UND VERFAHREN ZUR HERSTELLUNG EINER VERBINDUNGSANORDNUNG**
CONNECTION ARRANGEMENT AND METHOD FOR PRODUCING A CONNECTION ARRANGEMENT
SYSTÈME DE CONNEXION ET PROCÉDÉ DE FABRICATION DE SYSTÈME DE CONNEXION

(30) Priorität: 05.05.2020 DE 102020112051
(43) Veröffentlichungstag der Anmeldung: 15.03.2023
(73) Patentinhaber: One Mobility Autokabel GmbH, 72793 Pfullingen (DE)
(72) Erfinder: SEBETLELA, Kabelo, 79539 Lörrach (DE); BITNER, Urszula, 79541 Lörrach (DE)
(74) Vertreter: Cohausz & Florack
(86) Internationale Anmeldenummer: PCT/EP2021/060325
(87) Internationale Veröffentlichungsnummer: WO 2021/224002

(56) Entgegenhaltungen:
- WO-A1-2018/219515
- WO-A1-2019/154506
- DE-A1- 102018 101 990
- DE-A1- 102018 206 620
- JP-B2- 3 823 780
- US-B1- 6 352 193

## Beschreibung

Der Gegenstand betrifft eine Verbindungsanordnung für elektrische Flachleiter, insbesondere in automotiven Anwendungen, sowie ein Verfahren zur Herstellung einer solchen Verbindungsanordnung.

Elektrische Flachleiter, sogenannte Busbars, können gegenständlich aus Aluminium, Aluminiumlegierung, Kupfer oder Kupferlegierung gebildet sein. Diese Flachleiter dienen beispielsweise gegenständlich als sogenannte Energie Backbones zur Verteilung elektrischer Energien in Fahrzeugen, als Batteriezellverbinder und/oder als Modulverbinder. Dabei sind entlang des Flachleiters teilweise mehrere elektrische Abgänge zu realisieren, die heutzutage häufig als Anschlusslaschen gebildet sind.

Sind diese elektrischen Abgänge aus einem anderen metallischen Werkstoff als der Flachleiter, so ergibt sich eine sogenannte Mischbau-Flachleitung aus unterschiedlichen metallischen Werkstoffen. Das Verbinden dieser unterschiedlichen metallischen Werkstoffe, insbesondere wenn Aluminium einer dieser Werkstoffe ist, ist problematisch hinsichtlich des Übergangswiderstands an der Verbindungsstelle.

Aus der JP 3 823 780 B2 ist ein Rührreibschweißen bekannt.

Zur Realisierung eines elektrisch vorteilhaften elektrischen Übergangs zwischen dem Flachleiter und der Anschlusslasche wird beispielsweise ein Ultraschallschweißen vorgeschlagen. Beim Ultraschallschweißen wird eine Schweißenergie mittels Ultraschall über ein Schweißwerkzeug in die Fügepartner eingebracht. Diese beginnen zu vibrieren und durch ihre Relativbewegung zueinander kommt es an der Übergangsstelle zu einem Eintrag von Schweißenergie, einem anschließenden Aufschmelzen der Fügepartner und somit zu einer intermetallischen, stoffschlüssigen Verbindung.

Das Ultraschallschweißen ist ein bevorzugtes Schweißverfahren zum Herstellen intermetallischer Verbindungen von unterschiedlichen Metallen. Jedoch hat dieses Verfahren Nachteile, wenn räumlich nebeneinander entlang des Flachleiters mehrere intermetallische Verbindungen zwischen dem Flachleiter und jeweils einer Anschlusslasche gebildet werden müssen. Da, nachdem eine erste Anschlusslasche angeschweißt wurde, beim Anschweißen einer weiteren Anschlusslasche durch die Sonotrode des Ultraschallschweißwerkzeugs Untraschallschwingungen in die Fügepartner eingeprägt werden, kann es durch die Vibration zu einer Beschädigung der zuvor hergestellten intermetallischen, stoffschlüssigen Verbindung zwischen Flachleiter und Anschlusslasche kommen. Die erkaltete, ausgehärtete Schweißverbindung kann Risse, Mikrorisse oder sonstige Beschädigungen bekommen, so dass die vormals einwandfreie Schweißverbindung durch das Einbringen der Schweißenergie für die nächste Schweißverbindung beschädigt wird.

Aus diesem Grunde lag dem Gegenstand die Aufgabe zugrunde, eine Verbindungsanordnung zur Verfügung zu stellen, bei der eine Mehrzahl an Anschlusslaschen an einem Flachleiter dauerstabil angeordnet werden kann.

Diese Aufgabe wird durch eine Verbindungsanordnung nach Anspruch 1 sowie ein Verfahren nach Anspruch 13 gelöst.

Die gegenständliche Verbindungsanordnung umfasst zunächst einen Flachleiter. Dieser Flachleiter kann aus einem metallischen Metall, beispielsweise Aluminium oder einer Aluminiumlegierung sowie Kupfer oder einer Kupferlegierung gebildet sein.

Die Verbindungsanordnung kann in einem räumlich abgegrenzten Bereich des Flachleiters angeordnet sein oder sich über einen gesamten Flachleiter erstrecken. Auch können nebeneinander auf dem Flachleiter zwei oder mehr Verbindungsanordnungen vorgesehen sein. Der Flachleiter kann dabei als Busbar, insbesondere als Energie Backbone, gebildet sein. Auch kann der Flachleiter als Batteriezellverbinder oder Batteriemodulverbinder gebildet sein.

Der Flachleiter hat ein zumindest viereckiges Querschnittsprofil, insbesondere ein quadratisches oder rechteckiges Querschnittsprofil. Bei diesem Querschnittsprofil hat der Flachleiter zumindest zwei einander gegenüberliegende, zumindest teilweise in Längsrichtung parallel zueinander verlaufende erste und zweite Oberflächen. Die ersten und zweiten Oberflächen können bei einem rechteckigen Querschnittsprofil die breiten Seiten sein.

An dem Flachleiter werden gegenständlich Anschlusslaschen angeordnet. Auch die Anschlusslaschen können beispielsweise als Flachteil gebildet sein und haben insbesondere im Bereich der Fügefläche ein ebenso viereckiges, insbesondere rechteckiges oder quadratisches Querschnittsprofil. Die Anschlusslaschen können aber auch als Anschlussfahnen, Crimpanschlüsse oder dergleichen gebildet sein. Insbesondere kann eine Anschlusslasche aus einem Flachbereich und einem profilierten Bereich gebildet sein. Diese Bereiche können an distalen Enden der Anschlusslasche vorgesehen sein. Auch kann der Flachbereich beidseitig von profilierten Bereichen umgeben sein und die profilierten Bereiche können über den Flachleiter hinaus ragen. Der profilierte Bereich kann auf bogenförmige Aufnahme zur Aufnahme eines Rundkabels gebildet sein.

Die Anschlusslaschen können zumindest einen Kontaktbereiche, insbesondere anschließend an den profilierten Bereich aufweisen. Der Kontaktbereich dient zur Kontaktierung mit einem Leiter (Litzenleiter oder Vollmaterial). Hierzu kann der Kontaktbereich z.B. beschichtet, insbesondere vernickelt und/oder verzinnt sein, so dass ein Leiter angelötet werden kann. Der Leiter kann auch aufgeschweißt sein, insbesondere mittels Ultraschallschweißen oder Widerstandsschweißen. Auch kann der Kontaktbereich eine reliefförmige Oberfläche haben, um die Verschweißung zu optimieren. Der Flachbereich kann im Bereich einer Überlappung mit dem Flachleiter liegen.

Die Anschlusslaschen sind aus einem Blech, insbesondere als Stanz- oder Stanzbiegeteil gebildet. Die Anschlusslaschen werden mit einer Überlappung, insbesondere einem Überlappstoß auf der ersten Oberfläche des Flachleiters aufgelegt. Bei dieser Überlappung liegt ein Teil (Überlappbereich) einer Oberfläche der Anschlusslasche auf der ersten Oberfläche des Flachleiters und ein anderer Teil erstreckt sich über eine Längskante des Flachleiters hinaus.

Die Anschlusslaschen liegen in Längsrichtung des Flachleiters nebeneinander, sind jedoch dabei bevorzugt beabstandet voneinander.

Die Anschlusslaschen können an einem oder beiden Enden über eine Verbindung, insbesondere im Kontaktbereich, mit einem Leiter verfügen. Diese bereits bestehende Verbindung kann unter anderen mittels Ultraschallschweißen, Reibschweißen, Widerstandschweißen oder Laserschweißen erhalten werden. Hierbei ist von Bedeutung, dass die bereits bestehende Verbindung sich nicht in dem Überlappbereich der Anschlusslasche mit dem Flachleiter befindet.

Gegenständlich wird nunmehr vorgeschlagen, dass eine metallische Rührreibschweißfügezone ausgehend von der zweiten Oberfläche durch den Flachleiter hindurch hin zur ersten Oberfläche und in die Anschlusslaschen hineinragend gebildet ist. Eine durchgehende Rührreibschweißfügezone erstreckt sich durch den Flachleiter zwischen den beiden Oberflächen hindurch und in den Überlappbereich, in dem die Anschlusslaschen auf der ersten Oberfläche aufliegen, auch in die Anschlusslaschen hinein. Eine Rührreibschweißfügezone erstreckt sich somit durchgehend kontinuierlich entlang der Längsrichtung des Flachleiters und durch den Flachleiter hindurch bis in die Anschlusslaschen hinein. Gegenständlich ist es somit möglich, in einem einzigen Rührreibschweißprozess eine Mehrzahl von Anschlusslaschen gemeinsam stoffschlüssig mit dem Flachleiter zu verbinden. Die gebildete Verbindung ist dauerstabil und intermetallisch.

Beim Verbinden wird ein Anpressdruck auf die zweite Oberfläche ausgeübt und zusammen mit einem rotierenden Schweißstabs wird der Flachleiter von der zweiten Oberfläche hin zur ersten Oberfläche plastifiziert. Durch das Rühren wird darüber hinaus die an der ersten Oberfläche anliegenden Anschlusslaschen zumindest in Teilen plastifiziert. Somit wird sowohl der Werkstoff des Flachleiters als auch der Werkstoff der jeweiligen Anschlusslasche plastifiziert, und die Werkstoffe sowie teilweise vermischt. Es entsteht eine stoffschlüssige Verbindung zwischen den beiden Fügepartnern.

Beim Rührreibschweißen wird mit einer speziellen Rührreibschweißmaschine oder einer CNC-Maschine der Flachleiter gegen die Anschlusslaschen gedrückt. Dies kann mit Hilfe des Rührreibschweißwerkzeugs und dessen Schafts erfolgen. In dem Schaft wird ein Reibschweißstab, auch Pin genannt, rotiert oder oszilliert und auf die zweite Oberfläche aufgedrückt. Es ist ebenfalls möglich, dass das gesamte Rührreibschweißwerkzeug, bestehend aus einem Schaft und einem Pin in eine rotatorische Bewegung versetzt wird. Der Reibschweißstab bringt die Reibschweißenergie in den Flachleiter und die Anschlusslasche ein, so dass die metallischen Werkstoffe plastifizieren und sich intermetallisch verbinden. In einer durchgehenden Fügezone ist lediglich eine Eintauchstelle und eine Ausgangsstelle des Stabs entlang des Flachleiters über die Mehrzahl der Anschlusslaschen gebildet. Ansonsten fährt das Rührreibschweißwerkzeug in einer durchgehenden, kontinuierlichen, bevorzugt transversalen Bewegung entlang der Längsachse des Flachleiters auf der zweiten Oberfläche. Dennoch ist es möglich bei größeren Abständen der Laschen innerhalb eines Flachleiters mehrere Nähte nebeneinander zu fertigen. Hierbei ist zu beachten, dass eine Schweißnaht den Flachleiter mit mindestens zwei Anschlusslaschen verbindet.

Die Rührreibschweißfügezone ist aus während des Fügens plastifzierten Werkstoff des Flachleiters und der Anschlusslaschen gebildet. In dem Bereich entlang der Längsachse des Flachleiters, in dem an der ersten Oberfläche die Anschlusslasche aufliegt, wird sowohl der Werkstoff des Flachleiters, als auch der Werkstoff der Anschlusslasche plastifiziert. In den Bereichen, in denen die Anschlusslasche nicht anliegt, kann ausschließlich der Flachleiter plastifizieren.

Gemäß einem Ausführungsbeispiel wird vorgeschlagen, dass die metallische Fügezone in dem Flachleiter entlang seiner Längsachse durchgehend über zumindest zwei Anschlusslaschen gebildet ist. Die Anschlusslaschen liegen auf der erste Oberfläche beabstandet voneinander auf dem Flachleiter auf. Ausgehend von der zweiten Oberfläche wird die Fügezone in den Flachleiter und die Anschlusslaschen eingebracht. Die Fügezone erstreckt sich entlang der Längsachse des Flachleiters über zumindest zwei der Anschlusslaschen. Auch können mehrere, voneinander abgesetzte Fügezonen entlang der Längsachse des Flachleiters gebildet sein.

Gemäß einem Ausführungsbeispiel wird vorgeschlagen, dass der Flachleiter entlang seiner Längsachse durchgehend entlang der Rührreibschweißfügezone während des Fügens plastifiziert ist und in räumlichen Abständen zueinander die Anschlusslaschen an dem Flachleiter in der Fügezone anliegen. Die Fügezone ist im Flachleiter durchgehend und intermittierend geht sie in jeweils eine der Anschlusslaschen über. Zwischen zwei Anschlusslaschen ist bevorzugt ein Abstand gebildet.

Wie eingangs bereits erläutert, sind Flachleiter und Anschlusslaschen bevorzugt aus zueinander verschiedenen metallischen Werkstoffen gebildet. Dies kann beispielsweise dann sinnvoll sein, wenn der Flachleiter aus Aluminium oder einem Aluminiumwerkstoff gebildet ist und die Anschlusslaschen aus Kupfer oder einem Kupferwerkstoff gebildet sind. Die Anschlusslaschen können elektrische Abgänge, beispielsweise für ein Crimpanschluss, einen Schraubanschluss, einen Schweißanschluss oder dergleichen bilden. An den Anschlusslaschen können herkömmliche Kabel, insbesondere Kupferkabel, angeordnet werden. Um eine sortenreine Verbindung zwischen den Anschlusslaschen und dem angeschlossenen Kabel zu ermöglichen, sind die Anschlusslaschen insbesondere im Kontaktbereich bevorzugt aus dem gleichen Werkstoff, wie die davon abgehenden Kabel, die insbesondere aus Kupfer sind. Dies hat den Vorteil, dass die Übergangswiderstände zwischen den Anschlusslaschen und den daran angeordneten Kabeln gering sind, da Kupfer gegenüber Aluminium bei formschlüssigen Fügeverfahren elektrische Vorteile hat.

Zumindest eine der Anschlusslaschen ist in einer auf der ersten Oberfläche des Flachleiters gebildeten Ausnehmung angeordnet und zwischen den Ausnehmungen sind Stege auf dem Flachleiter gebildet. In einem Längsprofil des Flachleiters kann dieser stufenförmig mit Ausnehmungen und Stegen gebildet sein. Die Ausnehmungen können mittels Stanzen, Pressen, Fräsen, Schleifen oder dergleichen gebildet werden. Die Ausnehmungen verlaufen bevorzugt quer zur Längsrichtung, insbesondere senkrecht zur Längsrichtung über die erste Oberfläche des Flachleiters. Dennoch ist es möglich, die Ausnehmungen in Längsrichtung bzw. entlang der Stirnfläche an einer oder beiden Stirnkanten des Flachleiters anzuordnen. Bei solcher Anordnung wird bevorzugt, dass der zu verschweißende Flachleiter ebenfalls über mindestens eine Ausnehmung für die quer anzuordnende Laschen aufweist, um zumindest eine Anschlusslasche in Querrichtung und zumindest eine Anschlusslasche in Längsrichtung auf dem Flachteil gleichzeitig zu verschweißen.

Die Ausnehmungen erstrecken sich bevorzugt über die gesamte Breite des Flachleiters. In den Ausnehmungen können die Anschlusslaschen angeordnet werden. Die Ausdehnung der Ausnehmungen in Längsrichtung des Flachleiters entspricht bevorzugt in etwa der Breite der Anschlusslaschen, so dass die Anschlusslaschen insbesondere in einer Spielpassung, Übergangspassung oder Presspassung in die Ausnehmungen eingesetzt werden können. Zwischen den Ausnehmungen sind Erhebungen, insbesondere Stege gebildet.

Wie bereits erläutert, können die Ausnehmungen aus dem Flachleiter geformt werden, beispielsweise spanlos oder spanhebend. Es ist jedoch auch möglich, dass auf den Flachleitern neben den Anschlusslaschen die Stege bildende Platten aufgesetzt sind. Diese Platten haben insbesondere eine Höhe, die gleich der Höhe der Anschlusslaschen ist. Die Platten haben insbesondere eine Breite, die der Breite des Flachleiters entspricht.

Die Rührreibschweißfügezone kann sich in Längsrichtung entlang des Flachleiters abwechselnd in die Anschlusslaschen und die die Stege bildenden Platten erstrecken. Somit kann während des Rührreibschweißens eine Verbindung zwischen den Anschlusslaschen und dem Flachleiter als auch den Platten und den Flachleitern hergestellt werden.

Gemäß einem Ausführungsbeispiel wird vorgeschlagen, dass die Anschlusslaschen mit einer ersten Oberfläche auf dem Flachleiter aufliegen und mit einer zweiten, der ersten Oberfläche gegenüberliegenden Oberflächen plan mit den Stegen sind. Die Tiefe der Ausnehmungen entspricht insbesondere der Materialstärke der Anschlusslaschen, sodass wenn die Anschlusslaschen in die Ausnehmungen eingesetzt sind, diese plan mit der Oberfläche der Stege sind. Somit bildet sich nach dem Rührreibschweißen eine einheitliche erste Oberfläche des Flachleiters, die intermittierend aus den Anschlusslaschen und den Stegen gebildet ist.

Gemäß einem Ausführungsbeispiel wird vorgeschlagen, dass zumindest eine der Anschlusslaschen mit einer ersten Stirnfläche bündig mit einer ersten Längskante des Flachleiters ist und mit einer zweiten Stirnfläche über eine zweite, der ersten Längsachse gegenüberliegende Längsachse des Flachleiters ragt. Auch kann eine Anschlusslasche mit einem Überlappbereich auf dem Flachleiter aufliegen und beidseitig des Überlappbereichs jeweils eine Längskante des Flachleiters überragen. Die Breite der Anschlusslasche kann in dem Überlappbereich kleiner, gleich oder größer sein, als in zumindest einem eine Längskante überragenden Bereich insbesondere einen Kontaktbereich und/oder profilierten Bereich.

In dem Bereich der überragenden Stirnflächen kann die Anschlusslasche einen Kontaktbereich insbesondere in Form einer Anschlussbohrung, eines Anschlussbolzens, eines Crimpanschluss, einer Schweiß- oder Lötverbindung oder dergleichen aufweisen.

Die Anschlusslasche kann blank, bimetallisch oder beschichtet sein und im Bereich der Überlappung mit dem Flachleiter blank oder aus einem ersten Metallwerkstoff gebildet oder beschichtet sein und in einem Bereich, in dem die Anschlusslasche über die zweite Längskante ragt, blank, bimetallisch oder aus einem zweiten Metallwerkstoff gebildet oder beschichtet sein.

Gemäß einem Ausführungsbeispiel wird vorgeschlagen, dass der insbesondere weniger fester Werkstoff, wie z.B. der Flachleiter aus z.B. Aluminiumwerkstoff in der Rührreibschweißfügezone über seine gesamte Materialstärke durchgehend plastifiziert wird und dass der insbesondere festere Werkstoff wie z.B. Anschlusslaschen aus z.B. Kupferwerkstoff in der Rührreibschweißfügezone nur teilweise plastifiziert. Beim Rührreibschweißen wird bevorzugt der Flachleiter über seine gesamte Materialstärke plastifiziert. Die Anschlusslaschen hingegen müssen nur zumindest teilweise plastifizieren, da nur in dem Bereich des Übergangs zwischen Anschlusslasche und Flachleiter eine stoffschlüssige Verbindung gebildet werden muss. Auch können die Anschlusslaschen über die gesamte Materialstärke und der Flachleiter lediglich teilweise plastifizieren. Dann wird das Rührreibschweißwerkzeug an der Oberfläche der Anschlusslaschen angesetzt. Dies gilt insbesondere, sollte der Flachleiter aus einem Werkstoff mit höherer Festigkeit als die Festigkeit des Werkstoffes der Anschlusslaschen gebildet sein.

Gemäß einem Ausführungsbeispiel wird vorgeschlagen, dass die Rührreibschweißfügezone eine Breite quer zu ihrer Längserstreckung aufweist, die zumindest der Materialstärke der Anschlusslaschen entspricht. Dabei ist der Stab oder der Pin des Rührreibschweißwerkzeugs bevorzugt mit einem Durchmesser gebildet, der mindestens 50% der Materialstärke der Anschlusslaschen entspricht. Aufgrund der elektrischen Eigenschaften ist es bevorzugt, die Materialstärke der Anschlusslasche im Wesentlichen an den Durchmesser des Stabs oder Pins des Rührreibschweißwerkzeugs anzupassen. Dabei ist es möglich, dass der Durchmesser des Stabs oder Pins des Rührreibschweißwerkzeugs bis zu 90% der Materialstärke aufweist, zumindest jedoch 50 % der Materialstärke aufweist. Hierdurch wird eine ausreichend große Fügezone gebildet.

Gemäß einem Ausführungsbeispiel wird vorgeschlagen, dass sich die Rührreibschweißfügezone kontinuierlich entlang der Längsachse des Flachleiters über zumindest zwei Anschlusslaschen erstreckt. Somit gibt es innerhalb einer Schweißnaht nur eine Eintauch- und eine Ausgangsstelle, die als Schwachstellen angesehen werden können, wobei alle anderen Bereiche eine gleiche Fügequalität aufweisen. Es sind jedoch in Längsachse nebeneinander zwei oder mehr dieser Schweißnähte möglich, die jeweils zwei Anschlusslaschen mit dem Flachteil verbinden.

Ein weiterer Aspekt ist ein Verfahren nach Anspruch 13. Nachfolgend wird der Gegenstand anhand einer Ausführungsbeispiele zeigenden Zeichnung näher erläutert. In der Zeichnung zeigen:
- Fig. 1a, b: Flachleiter gemäß Ausführungsbeispielen;
- Fig. 2a-d: Anschlusslaschen gemäß Ausführungsbeispielen;
- Fig. 3: einen Flachleiter mit angeschweißten Anschlusslaschen gemäß Ausführungsbeispielen;
- Fig. 4a-c: Ansichten einer Verbindungsanordnung gemäß Ausführungsbeispielen;
- Fig. 5a, b: eine schematische Darstellung eines Verfahrens zur Herstellung einer Verbindungsanordnung gemäß Ausführungsbeispielen.
- Fig. 6: eine schematische Darstellung eines Verfahrens zur Herstellung einer Verbindungsanordnung gemäß Ausführungsbeispielen.

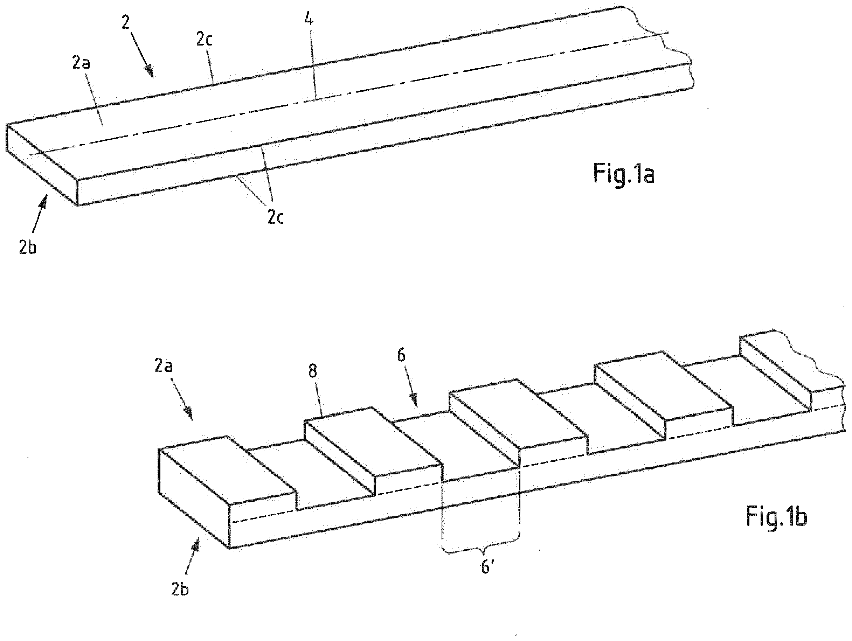

Fig. 1 zeigt einen Flachleiter 2. Der Flachleiter 2 erstreckt sich entlang seiner Längsachse 4 und hat ein Querschnittsprofil quer zur Längsachse 4, welches im Wesentlichen rechteckig ist. Der Flachleiter 2 hat zwei einander gegenüberliegende, parallel zueinander verlaufende breite Oberflächen 2a, 2b, die jeweils durch Längskanten 2c begrenzt sind.

Der Flachleiter 2 gemäß der Fig. 1a hat ebene, breite Oberflächen 2a, b. Wie in der Fig. 1b zu erkennen ist, kann eine der breiten Oberflächen 2a, b mit Ausnehmungen 6 und Stegen 8 gebildet sein. Die breite Oberfläche 2a mit den Ausnehmungen 6 und Stegen 8 kann als erste Oberfläche betrachtet werden und die breite Oberfläche 2b, die dieser gegenüberliegt, kann eben sein und als zweite Oberfläche betrachtet werden.

Die Ausnehmungen 6 können durch Überfräsen, Stauchen, Sägen, Schneiden, z.B. Wasserschneidnen, Laserschneiden oder dergleichen aus der breiten Oberfläche 2a geformt werden. Auch ist es möglich, dass plattenförmige Elemente als Stege 8 auf die breite Oberfläche 2a aufgesetzt werden. Die Ausnehmungen 6 und Stege 8 wechseln einander ab. Die Längserstreckung 6' einer Ausnehmung 6 entlang der Längsachse 4 kann einer Breite einer Anschlusslasche entsprechen. Es können abwechselnd Anschlusslaschen und Platten als Stege 8 auf den Flachleiter 2 aufgesetzt werden.

Der Flachleiter 2 und gegebenenfalls das Material der Stege 8 kann beispielsweise Aluminium oder eine Aluminiumlegierung sein. Es ist jedoch auch möglich, dass Kupfer oder eine Kupferlegierung zum Einsatz kommt.

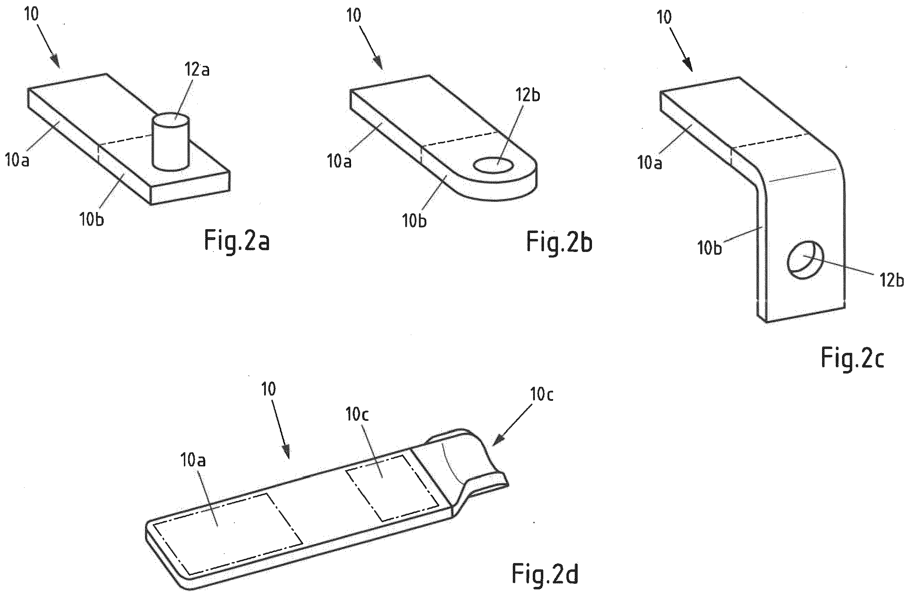

Auf den Flachleiter 2 werden Anschlusslaschen 10 aufgesetzt, wie in den Fig. 2a-c gezeigt.

Fig. 2a zeigt eine Anschlusslasche 10, die aus einem Blech geformt ist. Die Anschlusslasche 10 kann beispielsweise aus einem Blech gestanzt oder geschnitten sein. Die Anschlusslasche 10 kann aus Kupfer oder Kupferlegierung gebildet sein, es ist jedoch auch möglich, dass die Anschlusslasche 10 aus Aluminium oder Aluminiumlegierung gebildet ist. Die Anschlusslasche 10 kann auch bimetallisch gebildet sein, wobei ein erster Bereich 10a aus einem ersten metallischen Werkstoff und zweiter Bereich 10b aus einem zweiten metallischen Werkstoff gebildet oder vollständig oder selektiv beschichtet sein kann. Die metallischen Werkstoffe können entsprechend den oben genannten Werkstoffen sein.

Bei der Anschlusslasche 10 gemäß Fig. 2a ist in dem Bereich 10b ein Anschlussbolzen 12a vorgesehen.

Im Unterschied zu der Fig. 2a ist die Anschlusslasche 10 gemäß der Fig. 2b mit einer Durchgangsbohrung 12b im Bereich 10b versehen.

Die Anschlusslasche 10 kann auch als Biegeteil gebildet sein, wie in der Fig. 2c gezeigt ist. In der Fig. 2c ist gezeigt, dass der Bereich 10b gegenüber dem Bereich 10a gebogen ist. Insbesondere kann eine rechtwinklige Biegung der Anschlusslasche 10 gebildet sein.

Die Anschlusslasche 10 kann auch als profiliertes Flachteil gemäß Fig. 2d gebildet sein. In einem Überlappbereich 10a kann die Anschlusslasche 10 flach sein. In einem Kontaktbereich 10c kann die Anschlusslasche 10 beschichtet sein oder blank sein, um mit einem Leiter eines Kabels verschweißt oder verlötet zu werden. In einem profilierten Bereich 10b kann die Anschlusslasche 10 eine bogenförmige Mulde aufweisen, in der ein Kabel, insbesondere eine Isolation eines Kabels eingelegt werden kann.

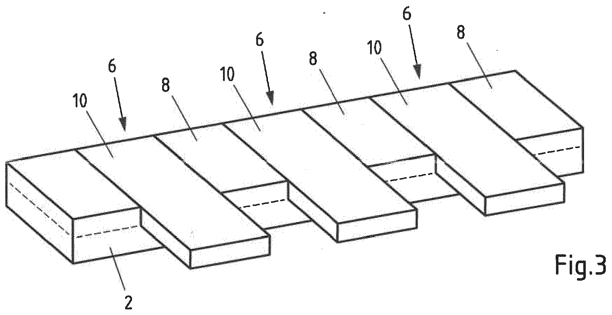

Die Anschlusslaschen 10 werden nebeneinander, beabstandet voneinander auf den Flachleiter 2 aufgesetzt, wie in der Fig. 3 zu erkennen ist. Der Flachleiter 2 ist hier bestückt mit drei Anschlusslaschen 10, die beabstandet voneinander auf den Flachleiter aufgesetzt sind. In der Fig. 3 ist optional gezeigt, dass der Flachleiter 2 mit Ausnehmungen 6 und Stegen 8 gebildet ist. Die Stege 8 beabstanden die Anschlusslaschen 10b voneinander. Zur Herstellung einer Verbindungsanordnung wird nunmehr vorgeschlagen, dass eine durchgängige Rührreibschweißfügezone 14, welche sich entlang der Längsachse 4 des Flachleiters 2 über mehrere Anschlusslaschen 10 erstreckt, gebildet wird.

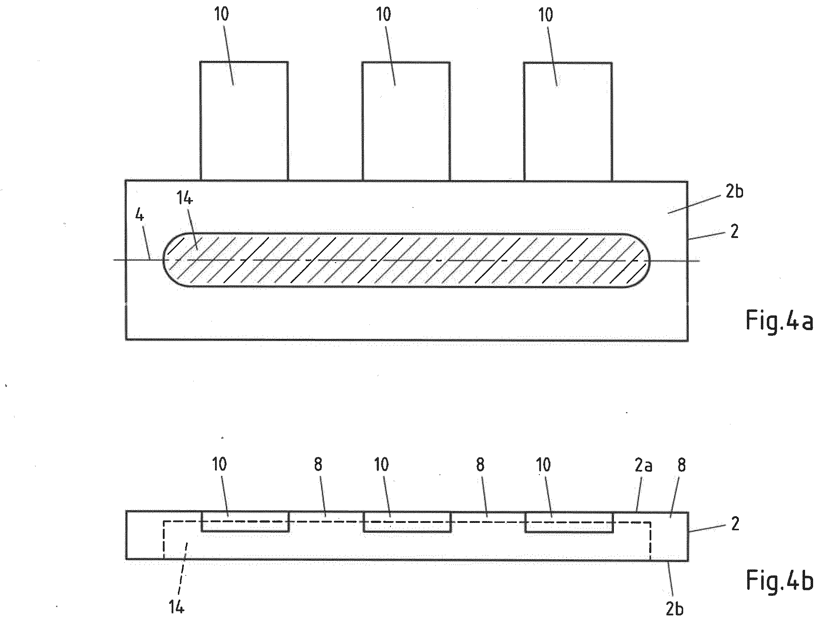

Fig. 4a zeigt den Flachleiter 2 von der breiten Oberfläche 2b. Zu erkennen ist, dass von der breiten Oberfläche 2b ausgehend eine sich in Längsachse erstreckende Rührreibschweißfügezone 14 gebildet ist. Auf der der breiten Oberfläche 2b gegenüberliegenden Oberfläche 2a des Flachleiters 2 sind die Anschlusslaschen 10 aufgesetzt. Die Rührreibschweißfügezone 14 erstreckt sich durch den gesamten Flachleiter 2 bis in die Anschlusslaschen 10 hinein. Dies ist gut in der Fig. 4b zu erkennen.

Die Fig. 4b zeigt einen Längsschnitt des Flachleiters 2. Zu erkennen ist, dass sich ausgehend von der breiten Oberfläche 2b hin zur breiten Oberfläche 2a die Rührreibschweißfügezone 14 durch den Flachleiter hindurch bis in die Anschlusslaschen 10 erstreckt. Dabei kann sich die Rührreibschweißfügezone 14 auch in die Stege 8 erstrecken, die beispielsweise aus plattenförmigen Elementen gebildet sind. Die Rührreibschweißfügezone 14 ist eine kontinuierliche Fügezone, die sich in Längsrichtung entlang der Längsachse 4 des Flachleiters 2 durch eine Mehrzahl von Anschlusslaschen 10 erstreckt.

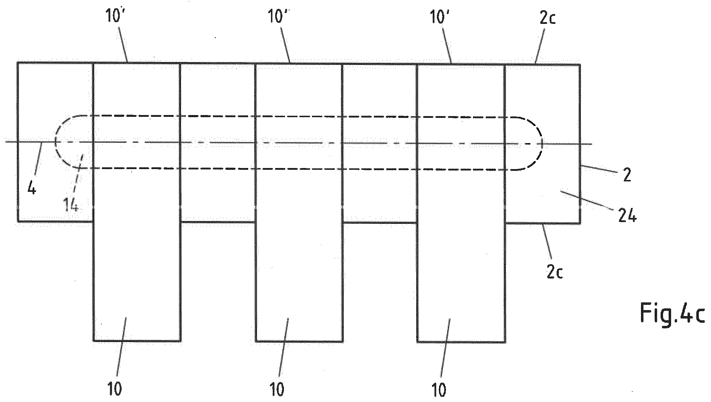

Fig. 4c zeigt die Verbindungsanordnung von der breiten Oberfläche 2a aus gesehen. Zu erkennen ist, dass die Anschlusslaschen 10 mit einer ersten Stirnfläche 10' fluchtend mit einer Längsachse 4 des Flachleiters 2 an der breiten Oberfläche 2a angelegt sind. Die Anschlusslaschen 10 ragen über die gegenüberliegende Längskante 2c des Flachleiters 2 hinaus. Die Rührreibschweißfügezone 14 erstreckt sich entlang der Längsachse 4 des Flachleiters über mehrere Anschlusslaschen 10 und verläuft kontinuierlich gerade entlang des Flachleiters 2. Mit Hilfe der Rührreibschweißfügezone werden die Anschlusslaschen 10 in einem einheitlichen Fügeprozess an den Flachleiter 2 angebunden.

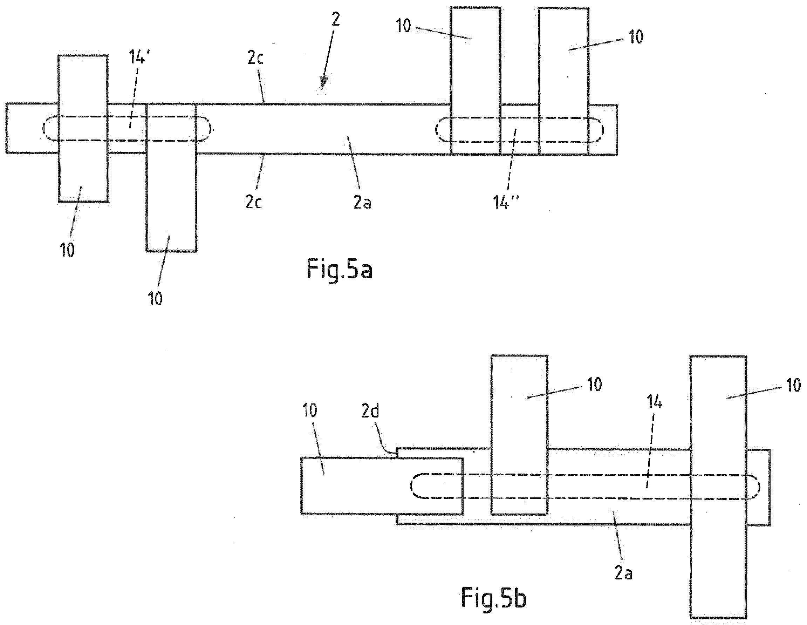

Fig. 5a zeigt den Flachleiter 2 von der breiten Oberfläche 2b. Zu erkennen ist, dass von der breiten Oberfläche 2b ausgehend zwei sich in Längsachse erstreckende Rührreibschweißfügezone 14', 14" gebildet sind. Auf der der breiten Oberfläche 2b gegenüberliegenden Oberfläche 2a des Flachleiters 2 sind für jede der Fügezonen 14', 14" zwei Anschlusslaschen 10 aufgesetzt. Die Rührreibschweißfügezonen 14', 14" erstrecken sich durch den gesamten Flachleiter 2 bis in die Anschlusslaschen 10 hinein. Die Anschlusslaschen 10 in einer Fügezone 14' können, wie links zu erkennen ist, über eine oder beide Längskanten 2c hinausragen. Die Anschlusslaschen 10 in einer Fügezone 14" können, wie rechts zu erkennen ist, über nur eine Längskanten 2c hinausragen.

Fig. 5b zeigt den Flachleiter 2 von der breiten Oberfläche 2b. Zu erkennen ist, dass von der breiten Oberfläche 2b ausgehend eine sich in Längsachse erstreckende Rührreibschweißfügezone 14 gebildet sind. Auf der der breiten Oberfläche 2b gegenüberliegenden Oberfläche 2a des Flachleiters 2 sind beispielhaft drei (von denen zwei beliebige auswählbar sind) Anschlusslaschen 10 aufgesetzt. Die Rührreibschweißfügezone 14 erstreckt sich durch den gesamten Flachleiter 2 bis in die Anschlusslaschen 10 hinein. Eine Anschlusslaschen 10 kann, wie links zu erkennen ist, über eine Stirnkante 2d des Flachteils 2 hinausragen. Eine Anschlusslaschen 10 kann, wie mittig zu erkennen ist, über eine Längskante 2c des Flachteils 2 hinausragen. Eine Anschlusslaschen 10 kann, wie rechts zu erkennen ist, über beide Längskanten 2c des Flachteils 2 hinausragen.

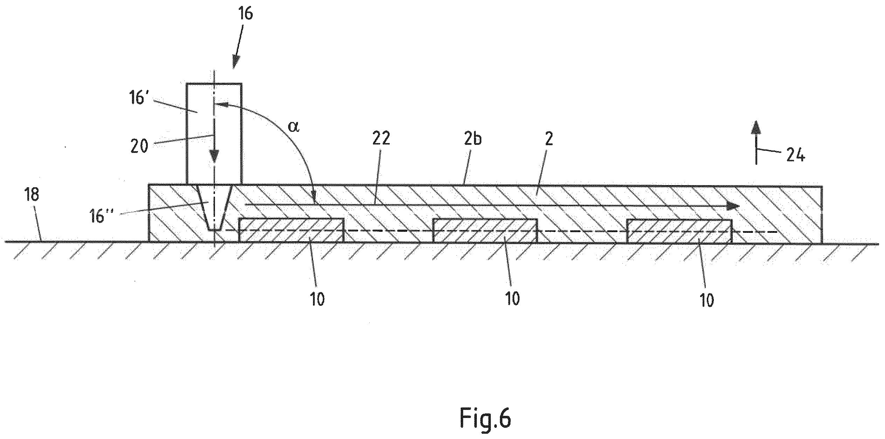

Hierzu wird, wie in der Fig. 6 schematisch dargestellt, ein Rührreibschweißwerkzeugs 16 auf die breite Oberfläche 2b aufgedrückt. Dabei drückt ein Schaft 16' den Flachleiter 2 gegen eine Werkplatte 18 und verklemmt die Anschlusslaschen 10 zwischen der Werkplatte 18 und dem Flachleiter 2. Entweder das gesamte Rührreibschweißwerkzeug 16 oder lediglich der Rührreibschweißstift 16" wird oszillierend oder drehend in den Flachleiter 2 in einer Richtung 22 unter einem Winkel α ≤ 90° zur Oberfläche 2b in den Flachleiter 2 hineingetrieben.

Durch den hohen Druck des Schaftes 16' und/oder die oszillierende Bewegung des Werkzeugs 16 wird das Material des Flachleiters 2 plastifiziert. Des Weiteren wird durch die oszillierende Bewegung des Stiftes 16" oder des gesamten Werkzeugs 16 das Material des Flachleiters 2 verrührt. Der Stift 16" dringt soweit in den Flachleiter 2 ein, dass auch das Material der Anschlusslaschen 10 teilweise plastifiziert und mit dem plastifizierten Material des Flachleiters verrührt wird.

Bei diesem Verschweißen wird das Rührreibschweißwerkzeug 16 entlang der Bewegungsrichtung 22, welche parallel zur Längsachse 4 verläuft, durch den Flachleiter 2 bewegt, wobei entlang der Bewegungsrichtung 22 die Rührreibschweißfügezone 14 gebildet ist.

Am Ende des Schweißvorgangs wird der Stift 16" in Richtung 24 aus dem Material des Flachleiters 2 herausbewegt. Im Verlauf des Prozesses bildet sich eine Rührreibschweißfügezone 14 durch den Flachleiter 2 und Teile der Anschlusslaschen 10.

### Bezugszeichenliste

- 2: Flachleiter
- 2a, b: breite Oberflächen
- 2c: Längskante
- 2d: Stirnkante
- 4: Längsachse
- 6: Ausnehmung
- 6': Längserstreckung
- 8: Steg
- 10: Anschlusslasche
- 10a, b: Bereich
- 12a: Bolzen
- 12b: Durchgangsbohrung
- 14, 14', 14": Rührreibschweißfügezone
- 16: Rührreibschweißwerkzeug
- 16': Schaft
- 16": Stift
- 18: Werkplatte
- 20-24: Bewegungsrichtung

## Patentansprüche

1. Verbindungsanordnung mit
- einem metallischen Flachleiter (2) mit
- einem zumindest viereckigen Querschnittsprofil und zumindest zwei einander gegenüberliegenden, zumindest teilweise in Längsrichtung parallel zueinander verlaufenden ersten und zweiten Oberflächen (2a, 2b),
- zumindest zwei Anschlusslaschen (10), welche auf der ersten Oberfläche (2a) mit einer Überlappung aufliegen und über zumindest eine Kante (2c) des Flachleiters (2) hinausragen, wobei
- eine metallische Rührreibschweißfügezone (14) ausgehenden von der zweiten Oberfläche (2b) durch den Flachleiter (2) hindurch hin zur ersten Oberfläche (2a) und in die Anschlusslaschen (10) hineinragend gebildet ist, wobei
- die Rührreibschweißfügezone (14) aus während des Fügens plastifiziertem Werkstoff des Flachleiters (2) und der Anschlusslaschen (10) gebildet ist und sich die Rührreibschweißfügezone (14) zwischen den beiden Oberflächen (2a, 2b) durch den Flachleiter (2) hindurch und in den Überlappbereich, in dem die Anschlusslaschen (10) auf der ersten Oberfläche (2a) aufliegen, in die Anschlusslaschen (10) hinein erstreckt,
**dadurch gekennzeichnet,**
- **dass** zumindest eine der Anschlusslaschen (10) in einer auf der ersten Oberfläche (2a) des Flachleiters (2) gebildeten Ausnehmung (6) angeordnet ist und dass zwischen den Ausnehmungen (6) Stege (8) gebildet sind und
- **dass** die Anschlusslaschen (10) aus einem Blech gebildet sind.

2. Verbindungsanordnung nach Anspruch 1,
**dadurch gekennzeichnet,**
- **dass** die Rührreibschweißfügezone (14) in dem Flachleiter (2) durchgehend über zumindest zwei Anschlusslaschen (10) entlang der Längsachse (4) des Flachleiters (2) gebildet ist, insbesondere dass entlang der Längsachse (4) des Flachleiters (2) zwei voneinander getrennte Rührreibschweißfügezonen (14', 14") mit jeweils zumindest zwei Anschlusslaschen (10) gebildet sind.

3. Verbindungsanordnung nach einem der vorangehenden Ansprüche,
**dadurch gekennzeichnet,**
- **dass** der Flachleiter (2) entlang seiner Längsachse (4) durchgehend entlang der Rührreibschweißfügezone (14) während des Fügens plastifiziert wird und in Abständen zueinander die Anschlusslaschen (10) an dem Flachleiter (2) in der Fügezone anliegen.

4. Verbindungsanordnung nach einem der vorangehenden Ansprüche,
**dadurch gekennzeichnet,**
- **dass** der Flachleiter (2) aus einem Aluminiumwerkstoff oder einem Kupferwerkstoff gebildet ist und/oder dass die Anschlusslaschen (10) aus einem Aluminiumwerkstoff oder einem Kupferwerkstoff gebildet sind.

5. Verbindungsanordnung nach einem der vorangehenden Ansprüche,
**dadurch gekennzeichnet,**
- **dass** die Rührreibschweißfügezone (14) aus einem Kupferwerkstoff oder einem Aluminiumwerkstoff gebildet ist, insbesondere wobei in der Rührreibschweißfügezone (14) eine intermetallische Phase zwischen den Werkstoffen des Flachteils (2) und der Anschlusslaschen (10) gebildet ist..

6. Verbindungsanordnung nach einem der vorangehenden Ansprüche,
**dadurch gekennzeichnet,**
- **dass** der Flachleiter (2) und die Anschlusslaschen (10) aus zueinander verschiedenen metallischen Werkstoffen gebildet sind insbesondere dass der Flachleiter (2) aus einem weniger festen, insbesondere weniger kompressionsfesten Werkstoff als die Anschlusslaschen (10) gebildet ist.

7. Verbindungsanordnung nach einem der vorangehenden Ansprüche,
**dadurch gekennzeichnet,**
- **dass** die Ausnehmung (6) der ersten Oberfläche (2a) des Flachleiters (2) aus dem Material des Flachleiters (2) herausgeformt ist oder dass auf dem Flachleiter (2) die Stege (8) bildende Platten aufgesetzt sind.

8. Verbindungsanordnung nach einem der vorangehenden Ansprüche,
**dadurch gekennzeichnet,**
- **dass** die Anschlusslaschen (10) mit einer ersten Oberfläche auf dem Flachleiter (2) aufliegen und mit einer zweiten, der ersten Oberfläche gegenüberliegenden Oberfläche plan mit den Stegen (8) ist.

9. Verbindungsanordnung nach einem der vorangehenden Ansprüche,
**dadurch gekennzeichnet,**
- **dass** zumindest eine der Anschlusslaschen (10) mit einer ersten Stirnfläche bündig mit einer ersten Längskante (2c) des Flachleiters (2) ist und mit einer zweiten Stirnfläche über eine zweite, der ersten Längskante (2c) gegenüberliegende Längskante (2c) des Flachleiters (2) ragt oder dass zumindest eine der Anschlusslaschen (10) mit einer ersten Stirnfläche über eine erste Längskante (2c) des Flachleiters (2) hinausragt und mit einer zweiten Stirnfläche über eine zweite, der ersten Längskante (2c) gegenüberliegende Längskante (2c) des Flachleiters (2) hinausragt oder dass zumindest eine der Anschlusslaschen (10) mit einer ersten Stirnfläche über eine Stirnkante (2d) des Flachleiters (2) hinausragt.

10. Verbindungsanordnung nach einem der vorangehenden Ansprüche,
**dadurch gekennzeichnet,**
- **dass** der Flachleiter (2) in der Rührreibschweißfügezone (14) über seine gesamte Materialstärke durchgehend plastifiziert wird und dass die Anschlusslaschen (10) in der Rührreibschweißfügezone (14) nur teilweise plastifiziert werden.

11. Verbindungsanordnung nach einem der vorangehenden Ansprüche,
**dadurch gekennzeichnet,**
- **dass** die Rührreibschweißfügezone (14) eine Breite quer zu ihrer Längserstreckung (6') aufweist, die zumindest 50% der Materialstärke der Flachteile (2) entspricht.

12. Verbindungsanordnung nach einem der vorangehenden Ansprüche,
**dadurch gekennzeichnet,**
- **dass** sich die Rührreibschweißfügezone (14) kontinuierlich entlang der Längsachse (4) des Flachleiters (2) erstreckt.

13. Verfahren zur Herstellung einer Verbindungsanordnung nach einem der vorangehenden Ansprüche mit den Schritten
- Bereitstellen eines metallischen Flachleiters (2), mit
- einem zumindest viereckigen Querschnittsprofil und zumindest zwei einander gegenüberliegenden, zumindest teilweise in Längsrichtung parallel zueinander verlaufenden ersten und zweiten Oberflächen (2a, 2b),
- Auflegen von zumindest zwei Anschlusslaschen (10) mit einer Überlappung auf der ersten Oberfläche (2a) des Flachleiters (2), so dass die Anschlusslaschen (10) über zumindest eine der Kanten (2c) des Flachleiters (2) hinausragen, wobei
- der Flachleiter (2) mit den Anschlusslaschen (10) durch den Flachleiter (2) hindurch mittels Rührreibschweißen gefügt wird, wobei eine Rührreibschweißfügezone (14) ausgehenden von der zweiten Oberfläche (2b) durch den Flachleiter (2) hindurch hin zur ersten Oberfläche (2a) und in die Anschlusslaschen (10) hineinragend gebildet wird, wobei die Rührreibschweißfügezone (14) aus während des Fügens plastifiziertem Werkstoff des Flachleiters (2) und der Anschlusslaschen (10) gebildet wird und sich die Rührreibschweißfügezone (14) zwischen den beiden Oberflächen (2a, 2b) durch den Flachleiter (2) hindurch und in den Überlappbereich, in dem die Anschlusslaschen (10) auf der ersten Oberfläche (2a) aufliegen, in die Anschlusslaschen (10) hinein erstreckt,
**dadurch gekennzeichnet,**
- **dass** zumindest eine der Anschlusslaschen (10) in einer auf der ersten Oberfläche (2a) des Flachleiters (2) gebildeten Ausnehmung (6) angeordnet wird wobei zwischen den Ausnehmungen (6) Stege (8) gebildet sind und
- **dass** die Anschlusslaschen (10) aus einem Blech gebildet werden.

## Claims

1. Connection arrangement with
- a metallic flat conductor (2) having
- an at least quadrangular cross-sectional profile and at least two opposing first and second surfaces (2a, 2b) extending at least partially parallel to one another in the longitudinal direction,
- at least two connecting lugs (10), which rest on the first surface (2a) with an overlap and project beyond at least one edge (2c) of the flat conductor (2), wherein
- a friction stir weld joint zone (14) is formed from material of the flat conductor (2) and of the connection lugs (10) which is plasticized during the joining operation and the friction stir weld joint zone (14) extends between the two surfaces (2a, 2b) through the flat conductor (2) into the overlap region, in which the connection lugs (10) rest on the first surface (2a) and into the connection lugs (10),
**characterized in that**
- at least one of the connection lugs (10) is arranged in a recess (6) formed on the first surface (2a) of the flat conductor (10), and **in that** webs (8) are formed between the recesses (6) and
- the connection lugs (10) are formed from metal sheet.

2. Connection arrangement according to claim 1,
**characterized in that**
- the friction stir weld joint zone (14) is formed in the flat conductor (2) continuously via at least two connection lugs (10) along the longitudinal axis (4) of the flat conductor (2), in particular **in that** two separate friction stir weld joint zones (14', 14") are formed along the longitudinal axis (4) of the flat conductor (2), each with at least two connection lugs (10).

3. Connection arrangement according to one of the preceding claims,
**characterized in that**
- the flat conductor (2) is plasticized continuously along its longitudinal axis (4) along the friction stir weld joining zone (14) during the joining operation, and the connecting lugs (10) abut against the flat conductor (2) in the joining zone at intervals from one another.

4. Connection arrangement according to one of the preceding claims,
**characterized in that**
- the flat conductor (2) is formed from an aluminum material or a copper material and/or **in that** the connection lugs (10) are formed from an aluminum material or a copper material.

5. Connection arrangement according to one of the preceding claims,
**characterized in that**
- the friction stir weld joint zone (14) is formed from a copper material or an aluminum material, in particular wherein an intermetallic phase is formed in the friction stir weld joint zone (14) between the materials of the flat part (2) and the connecting lugs (10).

6. Connection arrangement according to one of the preceding claims,
**characterized in that**
- the flat conductor (2) and the connecting lugs (10) are formed from mutually different metallic materials, in particular **in that** the flat conductor (2) is formed from a less strong, in particular less compression-resistant material than the connecting lugs (10).

7. Connection arrangement according to one of the preceding claims,
**characterized in that**
- the recess (6) of the first surface (2a) of the flat conductor (2) is formed out of the material of the flat conductor (2) or that plates forming the webs (8) are placed on the flat conductor (2).

8. Connection arrangement according to any one of the preceding claims,
**characterized in that**
- the connection lugs (10) rest on the flat conductor (2) with a first surface and are planar with the recesses (8) with a second surface opposite the first surface.

9. Connection arrangement according to any one of the preceding claims,
**characterized in that**
- at least one of the connecting lugs (10) has a first end face flush with a first longitudinal edge (2c) of the flat conductor (2) and a second end face projecting beyond a second longitudinal edge (2c) of the flat conductor (2) opposite the first longitudinal edge (2c), or **in that** at least one of the connecting lugs (10) has a first end face projecting beyond a first longitudinal edge (2c) of the flat conductor (2) and a second end face projecting beyond a second longitudinal edge (2c) of the flat conductor (2) opposite the first longitudinal edge (2c), or **in that** at least one of the connecting lugs (10) has a first end face projecting beyond an end edge (2d) of the flat conductor (2).

10. Connection arrangement according to any one of the preceding claims,
**characterized in that**
- the flat conductor (2) is continuously plasticized over its entire material thickness in the friction stir weld joining zone (14), and **in that** the connection lugs (10) are only partially plasticized in the friction stir weld joining zone (14).

11. Connecting arrangement according to one of the preceding claims,
**characterized in that**
- the friction stir weld joining zone (14) has a width transverse to its longitudinal extent (6') which corresponds to at least 50% of the material thickness of the flat parts (2).

12. Connection arrangement according to one of the preceding claims,
**characterized in that**
- the friction stir weld joint zone (14) extends continuously along the longitudinal axis (4) of the flat conductor (2).

13. Method of manufacturing a connection arrangement according to one of the preceding claims comprising the steps of
- providing a metallic flat conductor (2) having
- an at least quadrangular cross-sectional profile and at least two opposing first and second surfaces (2a, 2b) extending at least partially parallel to one another in the longitudinal direction,
- placing of at least two connecting lugs (10) with an overlap on the first surface (2a) so that the connection lugs (10) project beyond at least one edge (2c) of the flat conductor (2), wherein
- the flat conductor (2) is joined with the connection lugs (10) by friction stir welding, wherein a friction stir weld joint zone (14) is formed extending from the first surface (2a) through the flat conductor (2) to the second surface (2b) into the connection lugs (10) wherein friction stir weld joint zone (14) is formed from material of the flat conductor (2) and of the connection lugs (10) which is plasticized during the joining operation and friction stir weld joint zone (14) extends between the two surfaces (2a, 2b) through the flat conductor (2) into the overlap region, in which the connection lugs (10) rest on the first surface (2a) and into the connection lugs (10),
**characterized in that**
- at least one of the connection lugs (10) is arranged in a recess (6) formed on the first surface (2a) of the flat conductor (10), and **in that** webs (8) are formed between the recesses (6) and
- the connection lugs (10) are formed from metal sheet.

## Revendications

1. Dispositif de raccordement comprenant
- un conducteur plat métallique (2) avec
- un profil transversal au moins quadrangulaire et au moins deux premières et deuxièmes surfaces (2a, 2b) opposées l'une à l'autre, s'étendant au moins en partie parallèlement l'une à l'autre dans le sens longitudinal,
- au moins deux languettes de raccordement (10) qui reposent sur la première surface (2a) avec un chevauchement et dépassent d'au moins un bord (2c) du conducteur plat (2), où
- une zone de soudure par friction-malaxage métallique (14) est formée, partant de la deuxième surface (2b), traversant le conducteur plat (2) jusqu'à la première surface (2a) et s'étendant dans les languettes de raccordement (10), où
- la zone de soudage par friction-malaxage (14) est formée à partir de matériau plastifié du conducteur plat (2) et des languettes de raccordement (10) pendant le soudage, et la zone de soudage par friction-malaxage (14) s'étend entre les deux surfaces (2a, 2b) à travers le conducteur plat (2) et dans la zone de chevauchement dans laquelle les languettes de raccordement (10) reposent sur la première surface (2a), jusque dans les languettes de raccordement (10),
**caractérisé en ce**
- **qu'**au moins l'une des languettes de raccordement (10) est disposée dans un évidement (6) formé sur la première surface (2a) du conducteur plat (2) et que des nervures (8) sont formées entre les évidements (6) et
- **que** les languettes de raccordement (10) sont formées à partir d'une tôle.

2. Dispositif de raccordement selon la revendication 1,
**caractérisé en ce**
- **que** la zone de soudage par friction-malaxage (14) est formée dans le conducteur plat (2) de manière continue sur au moins deux languettes de raccordement (10) le long de l'axe longitudinal (4) du conducteur plat (2), en particulier que le long de l'axe longitudinal (4) du conducteur plat (2) deux zones de soudage par friction-malaxage (14', 14") séparées l'une de l'autre sont formées avec respectivement au moins deux languettes de raccordement (10).

3. Dispositif de raccordement selon l'une des revendications précédentes,
**caractérisé en ce**
- **que** le conducteur plat (2) est plastifié de manière continue le long de son axe longitudinal (4) le long de la zone de soudage par friction-malaxage (14) pendant le soudage et que les languettes de raccordement (10) sont disposées à intervalles réguliers sur le conducteur plat (2) dans la zone de soudage.

4. Dispositif de raccordement selon l'une des revendications précédentes,
**caractérisé en ce**
- **que** le conducteur plat (2) est formé d'un matériau en aluminium ou en cuivre et/ou les languettes de raccordement (10) sont constituées d'un matériau en aluminium ou en cuivre.

5. Dispositif de raccordement selon l'une des revendications précédentes,
**caractérisé en ce**
- **que** la zone de soudage par friction-malaxage (14) est formée d'un matériau en cuivre ou d'un matériau en aluminium, en particulier où une phase intermétallique est formée dans la zone de soudage par friction-malaxage (14) entre les matériaux de la pièce plate (2) et des languettes de raccordement (10).

6. Dispositif de raccordement selon l'une des revendications précédentes,
**caractérisé en ce**
- **que** le conducteur plat (2) et les languettes de raccordement (10) sont formés de matériaux métalliques différents les uns des autres, en particulier que le conducteur plat (2) est constitué d'un matériau moins résistant, en particulier moins résistant à la compression, que les languettes de raccordement (10).

7. Dispositif de raccordement selon l'une des revendications précédentes,
**caractérisé en ce**
- **que** l'évidement (6) de la première surface (2a) du conducteur plat (2) est formé dans le matériau du conducteur plat (2) ou en ce que des plaques formant des nervures (8) sont placées sur le conducteur plat (2).

8. Dispositif de raccordement selon l'une des revendications précédentes,
**caractérisé en ce**
- **que** les languettes de raccordement (10) reposent avec une première surface sur le conducteur plat (2) et sont planes avec les nervures (8) avec une deuxième surface opposée à la première surface.

9. Dispositif de raccordement selon l'une des revendications précédentes,
**caractérisé en ce**
- **que** au moins l'une des languettes de raccordement (10) affleure avec une première surface frontale avec un premier bord longitudinal (2c) du conducteur plat (2) et dépasse avec une deuxième surface frontale un deuxième bord longitudinal (2c) du conducteur plat opposé au premier bord longitudinal (2c) ou qu'au moins une des languettes de raccordement (10) dépasse avec une première face frontale au-delà d'un premier bord longitudinal (2c) du conducteur plat (2) et dépasse avec une deuxième face frontale au-delà d'un deuxième bord longitudinal (2c) opposé au premier bord longitudinal (2c) du conducteur plat (2) ou qu'au moins une des languettes de raccordement (10) dépasse avec une première face frontale au-delà d'un bord frontal (2d) du conducteur plat (2).

10. Dispositif de raccordement selon l'une des revendications précédentes,
**caractérisé en ce**
**que** le conducteur plat (2) est plastifié de manière continue sur toute son épaisseur dans la zone de soudage par friction-malaxage (14) et que les languettes de raccordement (10) ne sont plastifiées que partiellement dans la zone de soudage par friction-malaxage (14).

11. Dispositif de raccordement selon l'une des revendications précédentes,
**caractérisé en ce**
**que** la zone de soudage par friction-malaxage (14) a une largeur transversale par rapport à son extension longitudinale (6') qui correspond à au moins 50 % de l'épaisseur des pièces plates (2).

12. Dispositif de raccordement selon l'une des revendications précédentes,
**caractérisé en ce**
**que** la zone de soudage par friction-malaxage (14) s'étend de manière continue le long de l'axe longitudinal (4) du conducteur plat (2).

13. Procédé de fabrication d'un dispositif de raccordement avec les étapes
- fournir un conducteur plat métallique (2) avec
- un profil de section transversale au moins quadrangulaire et au moins deux premières et deuxièmes surfaces (2a, 2b) opposées l'une à l'autre, s'étendant au moins en partie parallèlement l'une à l'autre dans le sens longitudinal,
- poser au moins deux languettes de raccordement (10) avec un chevauchement sur la première surface (2a) du conducteur plat (2), de telle sorte que les languettes de raccordement (10) dépassent au moins l'un des bords (2c) du conducteur plat (2), où
- le conducteur plat (2) est soudé avec les languettes de raccordement (10) à travers le conducteur plat (2) au moyen d'un soudage par friction-malaxage, où une zone de soudage par friction-malaxage (14) est formée à partir de la deuxième surface (2b) à travers le conducteur plat (2) jusqu'à la première surface (2a) et s'étend jusque dans les languettes de raccordement (10), où la zone de soudage par friction-malaxage (14) est formée à partir de matériau plastifié pendant le soudage du conducteur plat (2) et des languettes de raccordement (10), et la zone d'assemblage par soudage par friction-malaxage (14) s'étend entre les deux surfaces (2a, 2b) à travers le conducteur plat (2) et dans la zone de chevauchement dans laquelle les languettes de raccordement (10) reposent sur la première surface (2a), jusque dans les languettes de raccordement (10), **caractérisé en ce**
- **qu'**au moins l'une des languettes de raccordement (10) est disposée dans un évidement (6) formé sur la première surface (2a) du conducteur plat (2), où des nervures (8) sont formées entre les évidements (6), et
- **que** les languettes de raccordement (10) sont formées à partir d'une tôle.
